(19) Europäisches Patentamt
European Patent Office
Office européen des brevets

(11) Publication number: **0 085 649**
**A1**

(12) **EUROPEAN PATENT APPLICATION**

(21) Application number: 83810018.8

(22) Date of filing: 17.01.83

(51) Int. Cl.$^3$: H 01 M 10/36

(30) Priority: 28.01.82 US 343466

(43) Date of publication of application: 10.08.83 Bulletin 83/32

(84) Designated Contracting States: AT BE CH DE FR GB IT LI LU NL SE

(71) Applicant: DIAMOND SHAMROCK CORPORATION
717 North Harwood Street
Dallas Texas 75201(US)

(72) Inventor: Bennett, John E.
1806 Jackson Street
Painesville Ohio 44077(US)

(72) Inventor: Harney, David E.
1257 Dorthea Drive
Painesville Ohio 44077(US)

(74) Representative: Cronin, Brian Harold John
c/o Eltech Systems Corporation 17-19, Chemin du Champ-d'Anier
CH-1209 Le Petit-Saconnex Geneva(CH)

(54) **Amine bronze suppression for improved membrane life in alkali metal sulfur systems.**

(57) A method and electrolyte for suppressing bronze formation and for suppressing electrolyte vapor pressure in an alkali metal-sulfur battery utilizing an anhydrous ammonia electrolyte. A quantity of a simple organic amine is introduced into the electrolyte to produce an electrolyte having at least 25% simple organic amine.

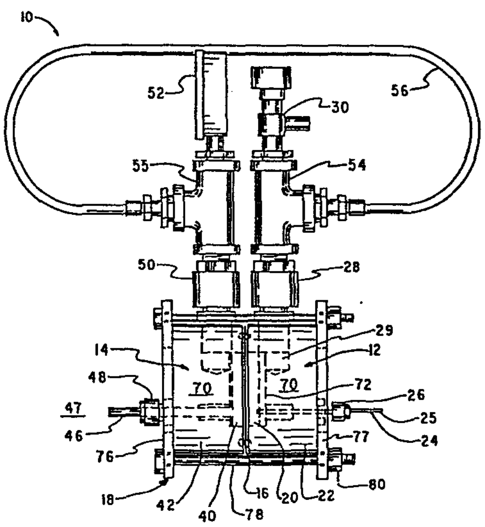


FIG. 1

EP 0 085 649 A1

# AMINE BRONZE SUPPRESSION FOR IMPROVED MEMBRANE LIFE IN ALKALI METAL SULFUR SYSTEMS

## Field of the Invention

This invention relates to electrical current storage batteries and more specifically to an apparatus and method for suppressing bronze formation and for reducing electrolyte vapor pressure in a rechargeable electrical current storage cell utilizing a reversible electrochemical reaction between an alkali or alkaline earth metal and sulfur for the storage and release of an electrical current.

## Background of the Invention

The basic concept of chemical generation and storage of electricity is quite old. Batteries can be traced to 1795 when Volta discovered that two dissimilar metals, placed in an electrically conductive fluid establish an electromotive force from which an electric current can be tapped. Various materials employed as electrodes, a variety of electrolyte possibilities, and numerous combinations of electrodes and electrolytes subsequently have been the object of considerable experimentation for nearly 200 years.

Electrochemical cells generate power when two energetic materials participate in a controlled oxidation-reduction reaction occurring in an ionically

conductive electrolyte. Electrons are transferred in the reaction, and these transferred electrons are collected and distributed by a pair of electrodes generally fabricated from metal, carbon, or the like. Electrons collected at one cell electrode are generally passed through an electrical load circuitry before being returned to the other electrode.

There are two basic electrochemical cell types. Secondary, or rechargeable cells generate electrical energy until some unacceptably low power output is reached caused by depletion of the reactants. Electrical current flow through the cell is thereupon reversed to cause a reversal of the oxidation reduction reaction by which the cell generates power. When a suitable portion of the cell reactants have undergone the reverse reaction, the cell is "recharged" and ready again to provide energy.

Primary cells generate power identically by an oxidation reduction until the reactants contained within the cell have essentially become spent. However, for a variety of reasons having their roots in the nature of the cell reaction or the cell physical configuration, current reversal to recharge the battery is not practical, and the cell is discarded or perhaps recycled.

In much battery development, emphasis has traditionally focused upon locating reactants producing a large amount of energy for a given reactant weight and volume. In addition, it has been necessary to locate conductive electrolytes, chemically compatible with the reactants. However, in larger rechargeable batteries, emphasis has traditionally focused upon improvements to battery electrodes and electrolytes aimed at producing a reasonably efficient battery at very low cost. As a result of this emphasis, these batteries have frequently incorporated low cost individual electrochemical reactants to generate the electromotive energy producing relatively small amounts of energy for a given weight of reactants. As a result of such a low ratio of evolved energy to

weight, relatively large amounts of the reactants necessarily have been included in these rechargeable batteries to produce a desired current over a required period of time. For example, according to theoretical calculations, the energy density capability of a lead acid storage battery is about 200 watt-hours per kilogram of reactants.

More recently, in an effort to develop transportation alternates for use in an impending world oil shortage, attempts have been made to power automotive vehicles utilizing electrically powered drive trains drawing electricity from storage batteries contained within the automotive vehicle. An automotive vehicle driven utilizing power provided by batteries carried within the vehicle is transporting the weight of not only the vehicle and its contents, but also of the storage batteries. It is known that vehicle efficiency is strongly dependent upon the weight carried within the vehicle. It has been found that automotive vehicles driven utilizing electrical current from conventional storage batteries having a relatively low energy density generally are not satisfactor. A conventional storage battery providing sufficient electrical current to operate a reasonable commodious automotive vehicle at acceptable speeds and over an acceptable distance is necessarily so weighty that efficient vehicle operation is impaired seriously.

Various attempts have been made to develop a rechargeable storage battery providing a relatively large amount of electromotive energy per unit weight of battery. Those skilled in the art, referring to the Periodic Table of Elements, have long recognized the alkali and alkaline earth metals and sulfur as possessing the desirable high energy and low weight characteristics. Electrochemical reactions between lower atomic weight alkali metals and sulfur and between lower atomic weight alkaline earth metals and sulfur have long been recognized as potentially

providing relatively large energies of reaction from reactants of attractively low weight. For example, according to theoretical calculations, a lithium sulfur battery can produce 2600 watt-hours of energy per kilogram of reactants, a lithium iron disulfide battery about 1100 watt-hours.

A number of proposals have attempted to pair alkali or alkaline earth metals with sulfur to produce an efficient storage battery. Many of these proposals have related to primary batteries, that is, batteries designed to use the electrochemical energy of freshly activated battery reactants only once; recharging of these batteries not being contemplated. Alkali or alkaline earth metals reacting with sulfur in such primary batteries have been found to provide acceptable primary battery performance, particularly where an anhydrous electrolyte such an ammonia has been used in the battery. Under anhydrous conditions batteries utilizing, for example, a lithium-sulfur electrochemical reaction pair will produce adequate electrical voltage at operating temperatures significantly below those where an aqueous battery would have become nearly dormant.

Previous proposals for rechargeable batteries utilizing an electrochemical reaction pair involving an alkali or alkaline earth metal and sulfur have proven less satisfactory.

In one proposal, sodium and molten sulfur have been selected as the oxidation reduction reactants. However, the high temperature required in these sodium sulfur batteries has caused serious practical difficulties associated with both heat insulation, particularly of bus bars and bus bar connections, and the make-up supply of heat during periods of extended battery dormancy. Battery housing materials, by necessity, must resist both the elevated temperature and corrosive attack from the reactants. Impurities such as moisture are generally severly dysfunctional to these batteries.

In another high temperature battery, lithium and iron disulfide in a molten salt electrolyte comprise the reactant pair. Beyond the same problems associated with high temperature sodium sulfur batteries, these lithium-iron disulfide cells can suffer from temperature induced iron disulfide instability and short cycle lives attributable at least in part to material migration difficulties.

There have been proposals for the use of an alkali, or alkaline earth metal sulfur, cell-oxidation reduction reaction at ambient temperature. In one such proposal, alkali metal-sulfur electrochemical reaction pairs such as lithium-titanium disulfide or lithium-sulfur have been utilized in combination with organically based electrolytes including dissolved salts. Short cycle lives of such batteries combined with a slow reaction between the organic electrolyte and the alkali metals such as lithium or sodium have dampened development of such batteries. Further, no wholly satisfactory organic electrolyte has yet been found particularly with respect to ionic conductivity. A low ionic conductivity tends not to support adequate cell discharge rates.

In another proposal, electrochemical batteries have utilized a cation producing alkali or alkaline earth metal anode and sulfur cathode together with an electrolyte solute such as an inorganic nitrate or perchlorate of the metal cation dissolved in a cell fluid such as ammonia. Such cells or batteries have demonstrated a capability of being recharged but also have demonstrated rapid decay in cell performance as measured by a reduced current and voltage output of the cell with each subsequent recharging. This decay in cell performance has been attributed to competing reactions between the chemical reactants within the cell, thereby reducing the quantity of chemicals available for storage of current.

It has been further proposed that such cells be divided to separate cell chemical components from one another in an effort to reduce the competing reactions between the electrochemical components. Division has not yet produced a wholly effective rechargeable alkali metal or alkaline earth metal-sulfur battery cell. One significant factor interfering with effective divided cell performance has centered about difficulties in finding a satisfactory divider material that resists destructive effects of fluids in the cell and yet passes metal cations. Another factor has been lack of a suitable supporting electrolyte for use in the cells that does not contribute significantly to competing cell reactions.

Water has long been a favored electrolyte solvent for use in rechargeable batteries. Water has not proven successful as an electrolyte solvent for batteries utilizing alkali and alkaline earth metal-sulfur reactions. Many of the metals react violently with water, and most forms of sulfur useful in the battery reaction are at best insufficiently soluble in the water.

Liquid ammonia exhibits many of the properties that make water a highly desirable battery electrolyte solvent. $NH_3$ is highly hydrogen bonded, resulting in an unusually elevated boiling point and a substantial heat of vaporization. Ammonia is a protonic, ionizing solvent superior to virtually all but water in dissolving a wide range of electrolyte salts; some salts conduct electricity better in $NH_3$ than in water.

Yet there are differences between water and liquid ammonia. $NH_3$ liquid is known to dissolve alkali and alkaline metals to form solutions of a metallic nature when concentrated. These so-called bronzes generally possess characteristics of both electronic and ionic conductance. Such dual properties can be attractive in batteries.

These bronzes have been generally recognized as thermodynamically unstable; some literature reporting half

lives as short as 190 hours. Such half lives would preclude utility in most secondary battery applications.

Ammonia is characterized by a theoretical dissociation voltage of 77 millivolts at 25°C. Such a low voltage would seem to seriously limit the use of ammonia in batteries wherein individual cell voltages of in excess of one volt are highly desired. Later evidence has indicated that the actual dissociation voltage of ammonia is significantly in excess of 77 millivolts as a result of significant electrode overvoltages. For these and other reasons, except for use in some primary batteries wherein the ammonia was introduced into the battery immediately prior to battery use, ammonia and ammonia bronzes have not been utilized extensively in batteries.

The use of sulfur as a cathode in conjunction with an ammonia solvent has been suggested since sulfur readily dissolves in ammonia. The kinetics of cell electrochemical reactions in which elemental sulfur is dissolved in ammonia together with supporting electrolytes such as salts have been determined to be quite slow, potentially limiting current flow rates when applied to batteries. Previous proposals have attempted to utilize a sulfur cathode in conjunction with an ammonia electrolyte by the addition of compounds such as alkali metal nitrates, perchlorates, thiocyanates, and the like.

It is with cell dividers that additional difficulties with alkali or alkaline earth metal sulfur batteries have been encountered and particularly those with an ammonia electrolyte solvent. It is desirable to separate sulfur from the anode vicinity in such cells to reduce competing cell reactions. Until now, a substantially satisfactory cell separator or partition has not been developed that would (1) retain sulfur in a cell cathode compartment, (2) readily transport cell metal cations, and (3) resist both cell chemical corrosiveness and blocking by-products of competing cell reactions.

In some rechargeable batteries it may be desirable to employ sulfur or a polysulfide as a cathode reactant and a very active alkali metal such as lithium as the anodic reactant, while using anhydrous ammonia as an electrolyte. Saturated solutions of sulfur or polysulfide in ammonia can have a markedly different vapor pressure from that of a lithium bronze at the same temperature. Where such battery cells are separated by a thin partition or membrane, a large pressure difference between cell compartments separated by the membrane can be dysfunctional to the membrane or partition.

In some configurations of a battery using an alkali or an alkaline metal anode, it is desirable that anhydrous ammonia be used as an electrolyte with the cell. Often these cells utilizing anhydrous ammonia as an electrolyte are divided by a partition or a membrane. Where a bronze froms between the alkali or alkaline earth metal and the ammonia, this aggressive metal bronze can cause severe damage to, particularly, sensitive cation exchange membranes, but also to partitions such as porous devices. It is known that providing an electrolyte (anolyte) containing a relatively large quantity of salts of the alkali or alkaline earth metal forming the anode can suppress formation of the bronze. However, the relatively large quantities of the salt required for bronze suppression can also prove damaging to the partition or membrane as well, and can promote side reactions in the cell that can markedly decrease performance.

Disclosure of the Invention

The present invention is a method and electrolyte for suppressing formation of a bronze between an alkali or alkaline earth metal anode present in the anode compartment of a partioned battery cell and anhydrous ammonia used for electrolyte purposes in the cell and for suppressing the vapor pressure of anhydrous

ammonia catholyte used in conjunction with a sulfur cathode in such batteries. An electrolyte made in accordance with the invention and utilized in a partitioned battery having an alkali or alkaline earth metal anode and a sulfur cathode results in an improved battery wherein the anode metal is present in solid form in lieu of being in a liquid or bronze form.

Bronze formation in the anode compartment of a reachargeable battery containing an alkali or alkaline earth metal and sulfur reactant pair and anhydrous ammonia electrolyte is suppressed by the introduction of at least one simple organic amine into the anhydrous ammonia.

An electrolyte made in accordance with the instant invention is used in a partitioned battery having an alkali or alkaline metal-sulfur reaction pair. Such use results in an improved anode compartment configuration or assembly wherein an anodic current collector contacts an anode of the alkali or alkaline earth metal. This anode is of a substantially solid form in lieu of being a liquid bronze. The anhydrous electrolyte including the added amine fills areas of the anode compartment between the anode and partition, conducting charged chemical species to and from the anode, while suppressing formation of a bronze. The electrolyte also fills the cathode compartment, the amines contained in the anhydrous ammonia electrolyte functioning to suppress electrolyte vapor pressure in the cathode compartment.

A battery made for utilizing the amine-ammonia electrolyte includes a housing surrounding a central chamber. A partition divides the chamber into two compartments. The partition is sealed to the housing to substantially resist movement of fluids between compartments.

An anode is placed within one of the compartments and electrically connected via the anode current collector with the outside of the housing. A cathode of a suitable or conventional type is positioned

within the other compartment in electrical communication with the outside of the housing. The compartment containing the cathode also contains a catholyte fluid that includes sulfur or polysulfides. A provision is made for equalizing pressure between the compartments.

The anode is an alkali or alkaline earth metal structure. The catholyte is a blend of; anhydrous ammonia, the simple organic amines, and sulfur or; anhydrous ammonia, the simple organic amines, and polysulfides corresponding to the metal comprising the anode or; a mixture of both sulfur and metal polysulfides in the amines and anhydrous ammonia. The polysulfides and sulfides are, for convenience referred to by the term sulfur. The anolyte is a mixture of anhydrous ammonia and the simple organic amines.

The catholyte supports adequate cell current flow well, though having no supporting electrolyte salts, contrary to the thinking and practice in the prior development of batteries relying upon a reaction between an alkali or alkaline earth metal and sulfur.

The partition separating the compartments is of a type freely permeable to cations of the metal but substantially resisting passage of sulfur or metal polysulfides between the compartments. During discharge of the battery, cations of the metal are released by the anode producing electrons at the anode current collector. These cations pass through the partition from the anode compartment to the cathode compartment. The cations react with sulfur or metal polysulfides in the cathode compartment which absorb electrons from the cathode. Upon recharging of the battery, the metal polysulfides surrender electrons to the cathode, and the metal cations pass through the partition from the cathode compartment to the anode compartment returning to the anode where electrons are reabsorbed.

In a preferred embodiment, the anode is formed from sodium, lithium, calcium or potassium.

The catholyte is prepared by blending the simple organic amine and polysulfides corresponding to the metal of the liquid anode into anhydrous ammonia. Generally where the anode metal is an alkali metal, the catholyte is prepared by blending alkali metal polysulfides in a composition range of from $M_2S_4$ to $M_2S_{18}$ and in a concentration of from 2 moles per liter to saturation in the ammonia. Where the liquid anode metal is an alkaline earth metal, the catholyte is prepared by blending alkaline earth metal polysulfides in a range of composition of from $MS_4$ to $MS_{18}$ and in a range of concentration of from 2 moles per liter to saturation in the ammonia.

Generally, cells utilizing catholytes employing shorter chain polysulfides tend to exhibit reduced voltage and current characteristics from those utilizing longer chain polysulfides. Cells utilizing longer chain polysulfides tend to undergo more rapid decav in cell performance following successive rechargings than cells utilizing shorter chain polysulfides. Polysulfides including a range of between $M_2S_4$ and $M_2S_{18}$ and including a range of $MS_4$ and $MS_{18}$ provide a geneally satisfactory compromise between cell life and cell efficiency.

In one version of a preferred embodiment, the partition is a thin sheet membrane formed from a blend of materials that include a substantial proportion of a copolymer of polyethylene and methacrylic acid or a copolymer of polypropylene an methacrylic acid or a polyethylene cation exchange membrane radiation grafted with sulfonic or carboxylic acid. Depending upon the nature of the cell chemicals, a microporous membrane such as microporous polypropylene, microporous alumina or glass frit may be utilized. It has been found that sulfur migration across the partition is a significant contributor to decay in cell performance following repeated rechargings. The selection of a membrane for a particular cell will be covered to a large degree by its

resistance to sulfur migration in the particular cell environment and by its resistance to attack by contents of both anode and cathode compartments of the cell.

The above and other features and advantages of the invention will become apparent from the following detailed description of the invention made with reference to the accompanying drawings which form a part of the specification.

## Description of the Drawings

Figure 1 is a frontal view of a battery cell made in accordance with this invention.

Figure 2 is an exploded view of the cell of Figure 1 viewed from the anode end of the cell.

Figure 3 is an exploded view of the cell of Figure 1 viewed from the cathode end of the cell.

## Best Mode for Carrying Out the Invention

Referring to the drawings, an electrical storage battery cell 10 is shown in Figures 1-3. The cell is comprised of an anode subassembly 12, a cathode subassembly 14, a divider 16 or a partition separating the subassemblies and a retaining assembly 18 joining the subassemblies. Assembled and properly filled, the cell is capable of rechargeably storing and releasing electrical current utilizing electrochemical reactions.

The anode subassembly is comprised of an anode compartment 20 formed by any suitable or conventional method within a generally cylindrical anode subhousing 22, and an anodic electrical current connection 24 or feeder between the compartment 20 and a point 25 outside of the subhousing 22. The electrical connector 24 is fabricated from a suitable or conventional material such as titanium, stainless steel or the like. The connector may optionally be equipped with a suitable or conventional grid or other structure 23 upon which anode metal may accumulate.

A fitting 26 supports the electrical connector 24 within the anode compartment 20 and performs as a seal, cooperating with the electrical connector 24 to resist leakage of fluid contained in the anode compartment 20 along the electrical connector 24 to the exterior of the subhousing 22 while the cell 10 is assembled and in use.

A fluid inlet 28 is provided for introducing an anolyte into the anode compartment. A fluid passage 29 communicates fluid through the subhousing 22 from the fluid inlet 28 to the anode compartment 20. A valve 30 is provided to retain fluid within the anode compartment.

The subhousing 22 includes a mating surface 31. A groove 32 of a size and shape suitable for receiving an "O" ring is formed in the mating surface.

When assembled into a cell, the anode subhousing is subject both to internal pressure generated by chemicals such as ammonia contained within the cell and to chemical attack by those contained chemicals. The housing, therefore, is formed from a material resistant to attack by chemicals contained within the cell and of a sufficient thickness and strength to withstand pressures anticipated within the anode compartment during operation of an assembled cell. In the best embodiment, the anode subhousing 22 is formed from a plastic material such as polyethylene, polypropylene, or the like.

The cathode subassembly 14 is comprised of a cathode compartment 40 formed by any suitable or conventional method within a generally cylindrical cathode subhousing 42 and a cathode 44. Like the anode subhousing 22, and for the same general considerations, the cathode subhousing 42 is formed from a plastic material such as polypropylene, polyethylene or the like of a sufficient thickness and strength to withstand pressures anticipated within the cathode compartment during operation of an assembled cell.

The cathode 44 is comprised of a generally circular metal mesh structure 45, and an electrical

connector 46 fixedly supporting the mesh structure 45, and electrically communicating between the mesh structure 45 and a point 47 outside the cathode subhousing 42. A cathode seal fitting 48 retains the electrical connector 46 in a predetermined position within the cathode compartment 40, thereby positioning the mesh structure 45 within the cathode compartment 40.

In the best embodiment, the cathode 44 is a dimensionally stable electrode comprising a generally well-known valve metal such as titanium, or the like, coated with an oxidized metal coating system such as Diamond Shamrock CX-DSA®, a proprietary Diamond Shamrock Corporation electrode coating system producing an electrode surface containing tin, ruthenium, and titanium oxides, or the like. Depending upon the chemicals utilized within the cell, other suitable or conventional cathode materials, including but not limited to, other valve metals coated with suitable coating systems, and carbon, may be used. Any such other cathode materials utilized must be relatively impervious to attack by chemical compounds contained or naturally occurring within the cell. Any alternate cathode materials must be of a suitable or conventional type for catalyzing the electrochemical reaction of sulfur or the alkali metal polysulfides.

A cathodic fluid inlet 50 is provided upon the cathode subhousing 42 for introducing a catholyte liquid into the cathode compartment 40. An inlet passage 51 communicates through the subhousing 42 between the fluid inlet 50 and the cathode compartment 40. A stopper 52 is provided to retain catholyte within the cathode compartment 40 when the cell is assembled. In the best embodiment, this stopper 52 also performs as a pressure gauge.

Connections 54, 55 and provided respectively on the anode fluid inlet 28 and the cathode fluid inlet 50. These connections are joined by a conduit 56 whereby

pressures in the anode compartment 20 and the cathode compartment 40 can be equalized.

The cathode subhousing 42 includes a mating surface 60. A groove 61 is formed in the mating surface of a size and shape suitable for receiving an "O" ring.

The subassemblies 12, 14 are joined utilizing the retaining assembly 18 to form the electrical storage cell 10. The mating surfaces 31, 60 of the subhousing 22, 42 are pressed together joining the subhousings 22, 42 and compartments 20, 40 into a generally cylindrical housing 70 having a central chamber 72 as shown in phantom in Figure 1. Retaining plates 76,77 are positioned at each end of the housing and the plates are connected by strain rods 78 threaded over a portion of their length and attached to the plates, using fasteners 80. Tightening the fasteners presses the mating surfaces 31,60 together.

The divider or partition 16 separates the anode and cathode compartments 20,40 of the chamber 72. An "O" ring 82 is carried in one of the grooves 31,61. The divider 16, of a size somewhat larger than a diameter of the "O" ring, is positioned between the mating surfaces 31,60 and is then pressed into the unoccupied groove, if flexible, or against a second "O" ring 82 as the fasteners 80 are tightened to force the mating surfaces one toward the other. Interaction between the grooves 32,61, the "O" ring 82, the second "O" ring, if used, and the divider 16 effectively seals against fluid communication between the compartments and fluid leakage from the chamber between the mating surfaces.

Typically, the anode compartment of a completed cell is charged before closing with an anode metal by placing the metal in the anode compartment or by coating a portion of the connector 24 with the metal. After closing, the anode compartment is charged with electrolyte made in accordance with the instant invention. The cathode compartment is charged with electrolyte containing dissolved sulfur either in the form of elemental sulfur or

in the form of metal polysulfides corresponding to the anode metal. Typically where the anode metal is lithium, the corresponding polysulfide is one of, or a mixture of, polysulfides ranging in composition from $Li_2S_4$ to $Li_2S_{18}$. When the anode metal is sodium, the corresponding polysulfide is one of, or a mixture of, polysulfides ranging in composition from $Na_2S_4$ to $Na_2S_{18}$. For calcium, a mixture of $CaS_4$ to $CaS_{18}$ is used, while $K_2S_4$ to $K_2S_{18}$ is used for potassium.

The divider 16 retains electrochemical reactants and the electrolytes within the compartments, but is freely permeable to cations of the anode metal. The divider particularly must function to retain sulfur within the cathode compartment. Sulfur entering the anode compartment reacts with the anode, removing reactants from electrochemical activity within the cell, and decreasing the electrochemical capacity that can be stored within and released from the cell, as well as interfering with movement of cations through the divider.

A number of materials have been found effective in inhibiting migration of sulfur from the cathode compartment to the anode compartment while remaining freely permeable to anode metal cations. An effective group of partitions has been identified as polyethylene or polypropylene based cation exchange membranes that include functional groups of sulfonic or carboxylic acid such as polyethylene cationic exchange membrane radiation grafted with sulfonated styrene. Examples include membranes manufactured as R-5010 by RAI Research Corporation. Membranes containing a substantial proportion of a copolymer of polyethylene and acrylic or methacrylic acid, or a copolymer of polypropylene and acrylic or methacrylic acid, such as Permion® E-6001 membranes manufactured by RAI, or EAHT-1575 membranes manufactured by SAC, have been found to perform effectively as dividers. Other effective dividers have been found to be partitions having sintered glass "windows," microporous polypropylene membranes such

as Cellgard® 5511, Darmic® microporous membranes formed from glass filled polypropylene, dividers of microporous alumina and elastomeric membranes including an alumina "window."

The anolyte is comprised of anhydrous ammonia that includes at least one simple organic amine. The anhydrous nature of the ammonia has been found important for cell conductivity and for preservation of the membrane as well as for avoiding undesired chemical interactions between water and the anode metal being used for electrochemical activity in the cell.

The simple organic amine can be a primary amine, pyridine, or a secondary amine. Preferably, the amines are of not more than 6 carbon atoms, and contain no unsaturated carbon bonds. The amine organic chains may be branched or unbranched. The amine should be present with the anhydrous ammonia in a quantity sufficient to suppress formation of a bronze between the anode metal and the anhydrous ammonia in the anode compartment and to substantially suppress the vapor pressure of ammonia in the cathode compartment. Generally the amine should comprise at least 25% by weight of the electrolyte, the optimal composition being a function of several factors including the anode metal, the cathode reactant, and the particular amine. An amine concentration as great as 100% can be utilized satisfactorily.

The anode metal can be an alkali or alkaline earth metal. It is desirable that the metal provides a relatively large quantity of electrical energy per unit weight of reactants. Since sulfur is the principal reactant at the cathode, one expedient for improving the energy per unit weight relationship is the use of anode metals having a relatively low molecular weight and a relatively elevated electropositive nature. Among the alkali and alakaline earth metals preferred in implementation of the instant invention are lithium, sodium, calcium and potassium. While other alkali or

alkaline earth metals, to wit: magnesium, rubidium, strontium, cesium and barium may be utilized, for reasons related to molecular weight, relative electropositive nature of the reactants, availability, cost, and mobility of the ions, they are generally less preferred.

Where relatively lightweight metals such as lithium, sodium, or calcium are utilized as anode reactant in conjunction with sulfur or polysulfides in a cell utilizing solely anhydrous ammonia electrolyte, the vapor pressure of electrolyte in the anode compartment can be substantially lower than the electrolyte vapor pressure in a corresponding cathode compartment. This pressure differential is exacerbated where quite lightweight metals such as lithium are utilized for an anode reactant. The lightweight metal and anhydrous ammonia form a bronze in the anode compartment of a cell having a surprisingly low vapor pressure while the vapor pressure of anhydrous ammonia electrolyte in the cathode compartment remains substantially elevated. A pressure differential of 100 pounds per square inch (psi) can occur, for example in a lithium-sulfur battery made in accordance with this best embodiment and omitting the amines.

Introduction of the simple organic amine into electrolyte present in the anode compartment surpresses bronze formation between the anode metal and anhydrous ammonia thereby effectively significantly elevating electrolyte vapor pressure in the anode compartment. Introduction of the simple organic amine into electrolyte present in the cathode compartment effectively suppresses vapor pressure of anhydrous ammonia catholyte. By raising electrolyte vapor pressure in the anode compartment, and suppressing electrolyte vapor pressure in the cathode compartment, pressures in the two compartments can be more readily equalized and thus alleviating strain upon the partition or membrane separating the compartments. It is not necessary that pressure between the compartments be

precisely equal since some pressure differential can be accommodated by the equalizing line 56.

The cell reactions for a cell made in accordance with this invention and utilizing a catholyte containing monovalent metal polysulfides of the form $M_2S_x$ have been postulated as follows:

at the anode: $2M \longrightarrow 2M^+ + 2e^-$

at the cathode: $2M^+ + (x-1)M_2S_x + 2e^- \longrightarrow xM_2S_{(x-1)}$

for a reversible cell reaction of:

$$2M \quad (x-1)\ M_2S_x \overset{2F}{\rightleftharpoons} x\ M_2S_{(x-1)}$$

A similar cell reaction has been postulated for divalent metal polysulfides of the form $MS_x$ to wit:

$$2M \longrightarrow M^{++} + 2e^-$$

$$M^{++} \quad (x-1)M_2S_x + 2e^- \longrightarrow x\ MS_{(x-1)}$$

for a reversible cell reaction of:

$$M + (x-1)\ MS_x \overset{2F}{\rightleftharpoons} x\ MS_{(x-1)}$$

Similar reactions will be apparent to those skilled in the art for cells employing catholyte containing only sulfur.

The following examples further illustrate the invention:

EXAMPLE 1

A cell structure was prepared according the the best embodiment of the invention. The cell subhousings were constructed from polypropylene. An RAI R-5010 high density membrane presenting a 16 square centimeter active surface to the cell was positioned between the cell subhousings to perform as a divider. The anode compartment of the cell was charged with 0.7 grams of lithium metal and 20 milliliters of a 50/50 mixture by weight of anhydrous ammonia and methylamine. The cathode compartment was charged with a lithium polysulfide prepared by blending 0.54 grams of lithium metal with .8 grams of sulfur, and with 20 milliliters of a 50/50 weight percent mixture of anhydrous ammonia and methylamine. The cathode compartment included a cathode having a titanium substrate and a Diamond Shamrock DSA-CX® coating, a mixture of tin, titanium, and rhuthenium oxides. The anode compartment included an anodic current feeder fabricated from a titanium rod.

Upon closure, the cell was alternately discharged for 30 minutes and then charged for 50 minutes at a 20 milliampere rate. Vapor pressure within the cell at the onset of testing was 55 pounds per square inch (gauge). A similar cell assembled using pure anhydrous ammonia in lieu of the 50/50 mixture with methyl amine displays an initial cell pressure of approximately 150 psig. Upon disassembly the cell displayed none of the deposits normally associated with degradation of lithium bronze. A similar cell utilizing only anhydrous ammonia in lieu of the 50/50 mixture of anhydrous ammonia and methyl amine displays these characteristic deposits.

EXAMPLE 2

A cell was prepared in accordance with Example 1 except that the anode compartment was charged with 2.2 grams of sodium metal, 1 gram of sodium bromide, 10 milliliters of anhydrous ammonia, and 10 milliliters of methyl amine. The cathode compartment was charged with 10 milliliters of anhydrous ammonia, 10 milliliters of methyl amine, and 6.5 grams of $Na_2S_4$.

The cell was alternately discharged for 30 minutes and then charged for 60 minutes at a current density of 6.2 milliamperes per square centimeter of membrane surface. Average cell voltage during discharge was 1.4 volts, and average cell voltage during charge was 2.8 volts.

Initial pressure within the cell was 50 pounds per square inch (gauge). A similar cell charged with anhydrous ammonia in lieu of the methyl amine displays an initial pressure of approximately 150 psig. Upon disassembly the cell was found to contain no deposits characteristic of degradation of bronzes within the cell. A similar cell assembled using anhydrous ammonia in lieu of methyl amine displays these deposits.

EXAMPLE 3

A cell was assembled in accordance with Example 1 except that an RAI R-5010 low density membrane was employed. The anode compartment was charged with 15 milliliters of methyl amine and 12 grams of sodium. The cathode compartment was charged with 21 milliliters of methyl amine and 5.5 grams of an $Na_2S_{10}$.

The cell was alternately charged and discharged for 30 minute periods at 1.2 milliamperes per square

centimeter of membrane surface. The average voltage on charge was 1.5 volts and the average voltage on discharge was 2.7 volts.

When assembled the cell displayed an initial pressure of 50 psig. A similar cell assembled using anhydrous ammonia demonstrates an initial pressure of approximately 150 psig. Upon disassembly no deposits characteristic of a degradated bronze were found in the anode compartment. A similar cell assembled using anhydrous ammonia in lieu of methyl amine displays these deposits characteristic of bronze degradation.

Although a single embodiment of a preferred form of the invention has been illustrated and described in detail, the present invention is not to be considered limited to the precise construction disclosed. Various adaptations, modifications and uses of the invention may occur to those skilled in the art to which the invention relates, and it is intended to cover all such adaptations, modifications, and uses which come within the spirit or scope of the appended claims.

What is claimed is:

1. A method for suppressing bronze formation and for suppressing catholyte ammonia vapor pressure in a rechargeable battery utilizing an alkali or alkaline earth metal and sulfur reactant pair comprising steps of: charging the battery with an anhydrous electrolyte including a substantial proportion of at least one sample organic amine, and being substantially free of electrolyte salts.

2. The method of claim 1 wherein the electrolyte comprises anhydrous ammonia and a simple organic amine present in a weight proportion of at least 25%.

3. The method of claim 1 wherein the electrolyte comprises exclusively at least one simple organic amine.

4. In the method of claims 1-3 the amine being selected from a group consisting essentially of primary organic amines of not more than six carbons, aniline, and secondary organic amines of not more than six carbons.

5. A relatively low vapor pressure anhydrous electrolyte for use in the method of claim 1 in suppressing bronze formation in a partitioned battery cell having a reactant pair of sulfur and one of an alkali and alkaline earth metal comprising: a substantial proportion of at least one simple organic amine and substantially free of electrolyte salts.

6. The electrolyte of claim 5, remaining proportions of the electrolyte comprising anhydrous ammonia.

7. The electrolyte of claims 5 or 6, the simple organic amine comprising at least about 25 % by weight of the electrolyte.

8. The electrolyte of claims 5-7, the amine being selected from a group consisting essentially of primary organic amines of not more than six carbon atoms, aniline, and secondary amines of not more than six carbon atoms.

9. A rechargeable alkali/alkaline earth metal-sulfur battery comprising an anhydrous electrolyte consisting of or containing a substantial proportion of at least one simple organic amine and being substantially free of electrolyte salts.

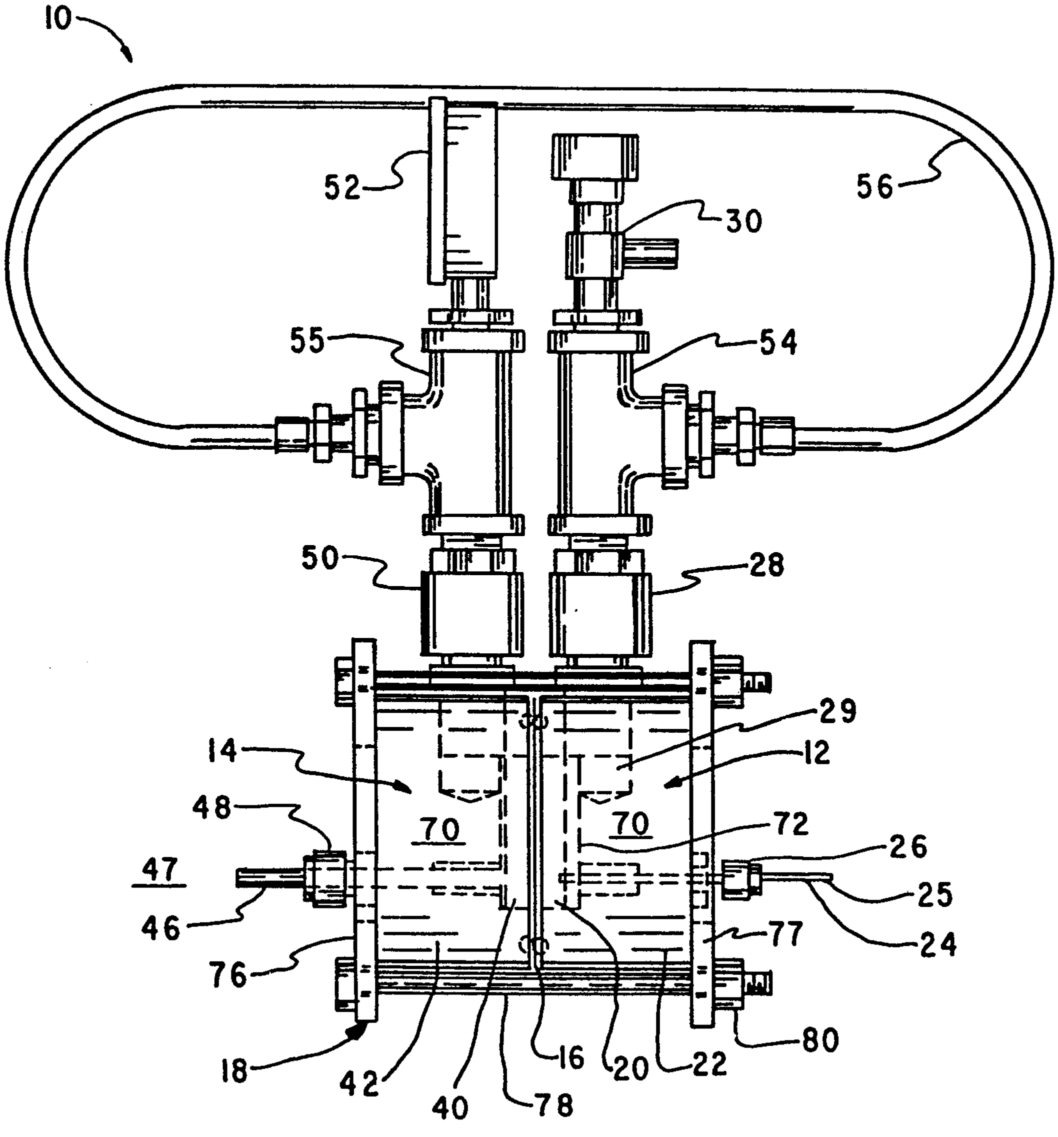
10
52
30
56
55
54
50
28
29
14
12
48
70
70
72
26
47
25
46
24
77
76
80
18
42
40
78
16
20
22

FIG. 1

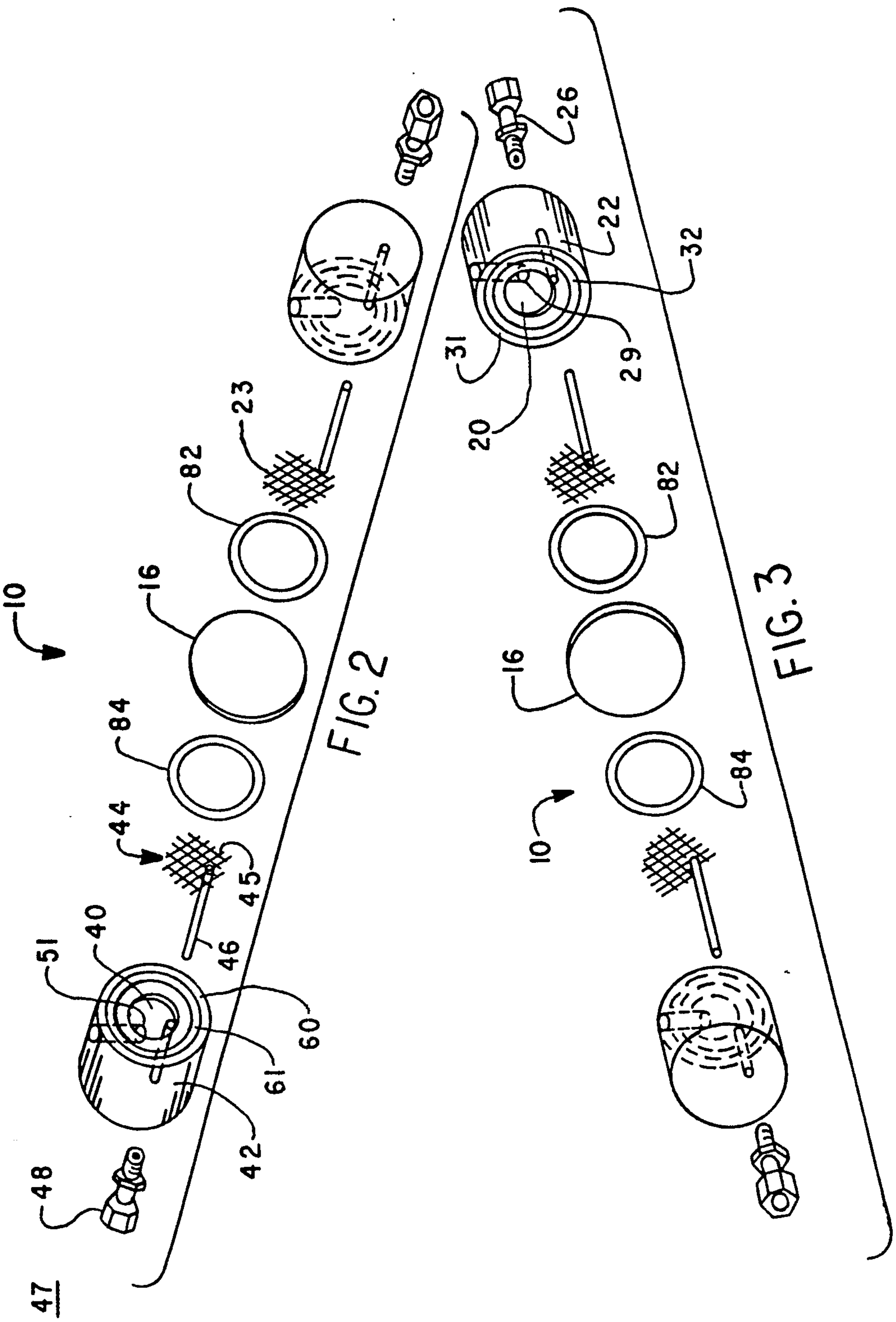
10
16
82
84
23
44
45
46
40
51
60
61
42
48
47
26
22
32
31
29
20
82
16
84
10

FIG. 2

FIG. 3

European Patent Office

# EUROPEAN SEARCH REPORT

0085649
Application number

EP 83 81 0018

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-2 863 933 (LEONARD JOHN MINNICK) *Column 1, lines 60-72; column 2, lines 1-37; column 3, lines 38-75; column 4, lines 1-7* | 1,2,4 | H 01 M 10/36 |
| Y | US-A-3 423 242 (WILLIAM F.MEYERS) *Column 2, lines 42-66; column 3* | 1,2 | |
| A | US-A-3 532 546 (WILLIAM S.HARRIS) | | |
| A | US-A-2 996 562 (WILLIAM F.MEYERS) | | |
| | | | TECHNICAL FIELDS SEARCHED (Int. Cl. 3) |
| | | | H 01 M 10/36<br>H 01 M 6/24<br>H 01 M 6/14 |

The present search report has been drawn up for all claims

| Place of search | Date of completion of the search | Examiner |
|---|---|---|
| THE HAGUE | 12-05-1983 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document